# FASCICULE DE BREVET EUROPEEN

(11) **EP 2 821 937 B1**
(45) Date de publication et mention de la délivrance du brevet: **11.09.2019**
(21) Numéro de dépôt: 14290189.1
(22) Date de dépôt: 26.06.2014
(51) Int. Cl.: G06K 9/20, G06K 9/00, G06K 9/62

(54) **Procédé et dispositif pour la détection de lueurs de bouche d'armes légères**
Verfahren und Vorrichtung zur Detektion von Mündungsfeuern von Leichtwaffen
Method and device for detecting muzzle flash of light weapons

(30) Priorité: 02.07.2013 FR 1301562
(43) Date de publication de la demande: 07.01.2015
(73) Titulaire: MBDA France, 92350 Le Plessis-Robinson (FR)
(72) Inventeur: Le Croller, David, 75012 Paris (FR); Teodoro, Thierry, 75018 Paris (FR); Assouly, Jean-Luc, 94260 Fresnes (FR); Garrigues, Pierre, 78000 Versailles (FR)
(74) Mandataire: Gevers & Orès

(56) Documents cités:
- EP-A2- 0 707 416
- WO-A1-2012/040157
- WO-A2-00/69166
- WO-A2-2007/056753
- US-A- 5 596 509
- US-A1- 2001 002 045
- US-B1- 6 590 611
- EL GAMAL A ET AL: "CMOS image sensors", IEEE CIRCUITS AND DEVICES MAGAZINE, IEEE SERVICE CENTER, PISCATAWAY, NJ, US, vol. 21, no. 3, 1 mai 2005 (2005-05-01), pages 6-20, XP011133522, ISSN: 8755-3996
- Andrea Cavallaro: "Change Detection for Object Segmentation" In: Belbachir A: "Smart Cameras", 1 janvier 2010 (2010-01-01), Springer, New York, USA, XP002720243, ISBN: 978-1-4419-0952-7 pages 190-194, * page 192 - page 194 *
- EL GAMAL A ET AL: "Pixel-level processing-why, what, and how?", PROCEEDINGS OF SPIE, S P I E - INTERNATIONAL SOCIETY FOR OPTICAL ENGINEERING, US, vol. 3650, 28 janvier 1999 (1999-01-28), pages 2-13, XP002570827, ISSN: 0277-786X
- Ming-Bo Lin: "Introduction to VLSI Systems: A Logic, Circuit, and System Perspective" In: "Introduction to VLSI Systems: A Logic, Circuit, and System Perspective", 1 January 2012 (2012-01-01), CRC Press, XP055331554, ISBN: 978-1-4398-6859-1 page 306,

## Description

La présente invention concerne un procédé et un dispositif pour la détection de lueurs de bouche d'armes légères, telles que les armes d'infanterie.

Quoique non exclusivement, la présente invention est particulièrement appropriée à être mise en oeuvre à bord de véhicules terrestres, d'avions et d'hélicoptères militaires susceptibles d'être la cible de tirs d'armes légères terrestres.

On connaît déjà des indicateurs de tirs d'armes légères basés sur la détection acoustique de ces tirs. Cependant, ces indicateurs acoustiques présentent un taux de fausses alarmes élevé et un délai de réaction trop long. De plus, leurs indications goniométriques sont particulièrement peu précises.

En conséquence, il serait utile de pouvoir détecter de tels tirs à l'aide de photodétecteurs infrarouge, comme cela est le cas pour les missiles. Toutefois, la détection infrarouge des lueurs de bouche d'armes légères soulève des difficultés, notamment à cause de la brièveté (quelques ms) et du faible niveau (quelques W par stéradian) de l'intensité apparente de la lueur de bouche de ces armes légères, ainsi que des balles qu'elles tirent. Pour contourner ces écueils, on pourrait songer :
- soit à augmenter la fréquence d'acquisition et de déchargement des images fournies par le photodétecteur infrarouge, mais ceci représenterait alors un volume de données à transférer et à traiter qui pour une solution « full tv » se heurte à une limite technologique ;
- soit à augmenter la fréquence d'acquisition des images par le photodétecteur infrarouge, en ne déchargeant ces images que pour un ensemble de plusieurs acquisitions consécutives, mais, dans ce cas, le signal utile serait noyé dans un important bruit de paysage.

La présente invention a pour objet de remédier à ces inconvénients et de permettre la détection efficace de la lueur de bouche d'armes légères et des balles qu'elles tirent au moyen de photodétecteurs infrarouge.

À cette fin, selon l'invention, le procédé pour la détection de lueurs de bouche d'armes légères au moyen d'un photodétecteur matriciel infrarouge, est décrit dans la revendication 1.

En effet, la Demanderesse a observé que les lueurs de bouche des armes légères émettaient principalement dans des longueurs d'onde comprises entre 3 et 5 µ m. Par suite, en ce qui concerne la détection de ces lueurs de bouche, le procédé de l'invention est particulièrement optimal.

On remarquera que le document US 5 596 509 met en oeuvre un détecteur MWIR pour déterminer la trajectoire de balles. La faible fréquence image (200 Hz) du détecteur utilisé ne permet pas d'assurer la détection d'une lueur de bouche de quelques ms, cette dernière pouvant se produire entre deux images successives. Si, par hasard, la lueur de bouche se produisait pendant l'acquisition d'une image par ce détecteur connu, l'image de cette lueur de bouche serait entièrement comprise dans l'image acquise, ce qui exclut la redondance procurée par la présente invention (voir ci-après).

Par ailleurs, dans le procédé de l'invention, les lueurs de bouche et les balles tirées sont révélées par les seules différences des parties d'images consécutives qui dépassent le seuil, de sorte que les informations extraites sont particulièrement limitées et constituées uniquement de signal utile.

Les différences des parties d'images consécutives qui dépassent le seuil peuvent être déchargées immédiatement après seuillage, par exemple à une fréquence de l'ordre de 1000 Hz, ou être stockées et accumulées dans une zone tampon, puis être déchargées ensuite de celle-ci à une fréquence inférieure à 1000 Hz.

La présente invention concerne de plus un dispositif pour la détection de lueurs de bouche d'armes légères au moyen d'un photodétecteur infrarouge matriciel séquentiel comportant une pluralité de photosites dont chacun d'eux forme une partie de l'image du paysage observé par ledit photodétecteur selon la revendication 6, ce dispositif étant remarquable :
- en ce que ledit photodétecteur est sensible dans la bande MWIR (Mid - Wave - InfraRed en langue anglaise) réagissant aux rayonnements infrarouge dont la longueur d'onde est comprise entre 3 et 5 µ m et est apte à acquérir des images successives à une fréquence de l'ordre de 1000 Hz ;
- en ce que, à chacun desdits photosites, est associé un circuit de mesure comprenant :
   - des premiers moyens de stockage de la partie correspondante de l'image courante,
   - des deuxièmes moyens de stockage de la partie correspondante de l'image précédente,
   - des moyens aptes à effectuer la différence entre ladite partie de l'image courante et ladite partie de l'image précédente,
   - des troisièmes moyens de stockage de ladite différence d'images, et
   - des moyens de seuillage de ladite différence d'images au moyen d'un seuil au moins approximativement représentatif du bruit dudit paysage pour ne laisser passer que les signaux de différence supérieurs au seuil (S), et
- en ce que sont prévus des moyens pour décharger uniquement les différences de parties d'images supérieures audit seuil et caractérisées par leur coordonnées (X et Y) sur la photodétecteur et leur intensité.

Par exemple, lesdits premiers, deuxièmes et troisièmes moyens de stockage comportent des condensateurs.

Avantageusement, ledit circuit de mesure associé à chaque photosite comporte de plus un registre de transfert, par exemple du type registre à décalage, commandant lesdits premiers et deuxièmes moyens de stockage pour faire passer, à chaque séquence de fonctionnement du photodétecteur, ladite partie de l'image courante de la séquence précédente depuis lesdits premiers moyens de stockage jusqu'auxdits deuxièmes moyens de stockage. Ainsi, ladite partie de l'image courante de la séquence précédente forme ladite partie de l'image précédente et lesdits premiers moyens de stockage peuvent emmagasiner ladite partie de l'image courante de la séquence en cours, en vue de la réalisation de ladite différence d'images.

De préférence, ledit seuil est réglable afin de pouvoir adapter le dispositif de détection de l'invention à différents paysages.

Par ailleurs, il est avantageux que, à chaque photosite, soit associée une prise de signal disposée en parallèle sur le circuit de mesure correspondant. Ainsi, le dispositif de détection conforme à la présente invention peut aisément être couplé, et même intégré, à un autre détecteur, par exemple à un détecteur de missiles hostiles.

On remarquera que le dispositif de détection conforme à la présente invention, qui est apte à détecter les signaux infrarouge brefs et de faible intensité de lueurs de bouche ou de balles, peut a fortiori détecter des signaux infrarouge moins brefs et de plus grande intensité.

Les figures du dessin annexé feront bien comprendre comment l'invention peut être réalisée. Sur ces figures, des références identiques désignent des éléments semblables.
La figure 1 montre le schéma synoptique d'un exemple de réalisation du dispositif conforme à la présente invention.
La figure 2 illustre schématiquement le fonctionnement du dispositif de la figure 1.

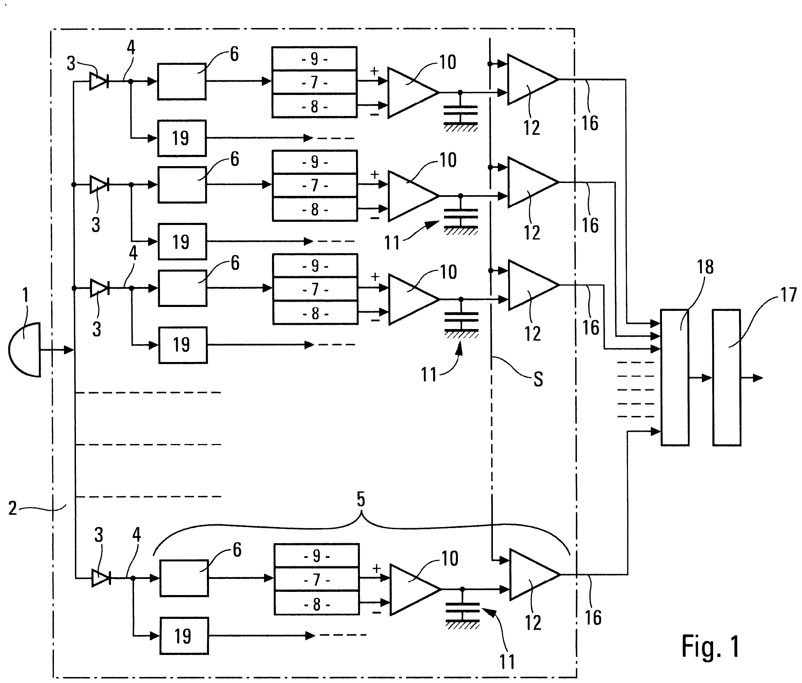

Le dispositif conforme à la présente invention, représenté schématiquement sur la figure 1 et apte à détecter la lueur de bouche d'armes légères d'infanterie, comporte un objectif hypergone 1, généralement appelé objectif fisheye, et un photodétecteur matriciel infrarouge 2, recevant le flux lumineux capté par l'objectif 1.

Le photodétecteur infrarouge 2 réagit aux rayonnements infrarouge de la partie du spectre MWIR (Mid-Wave InfraRed, en langue anglaise) dont les longueurs d'ondes sont comprises entre 3 et 5 µ m. Le photodétecteur infrarouge 2 comporte une pluralité de photosites 3, répartis en lignes et en colonnes pour former une matrice de détecteurs infrarouge. Par exemple, le photodétecteur 2 peut être réalisé en tellurure de mercure-cadmium, comme ceux connus commercialement sous les noms URANUS MW et SCORPIO MW de la société SOFRADIR et comportant une matrice de 640x512 photosites.

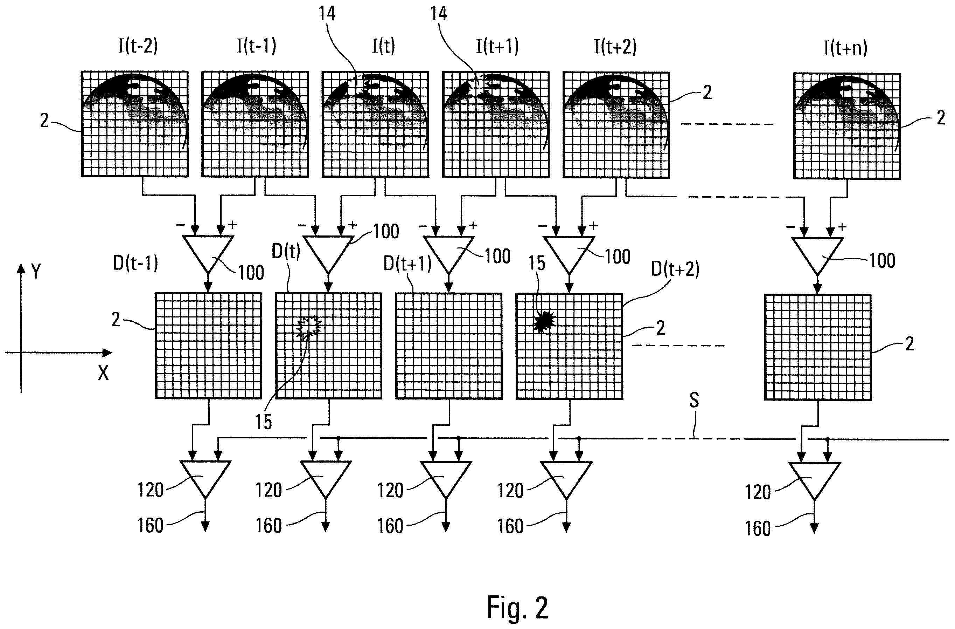

Comme cela est connu et représenté sur la figure 2, à des instants successifs ...t-2, t-1, t, t + 1, t + 2,...t + n,... l'ensemble des signaux électriques apparaissant sur les sorties 4 des photosites 3 du photodétecteur 2 forme séquentiellement des images successives ...I(t-2), I(t-1), I(t), I(t + 1), I(t + 2),...I(t + n),... du champ observé par l'objectif 1. La fréquence desdites images est par exemple de 1000 Hz.

Comme on peut le voir sur la figure 1, la sortie 4 de chacun des photosites 3 est reliée à un circuit 5 comprenant :
- un étage d'injection 6,
- des premiers moyens de stockage de signaux électriques 7, comprenant par exemple au moins un condensateur (non représenté),
- des deuxièmes moyens de stockage de signaux électriques 8, comprenant par exemple au moins un condensateur (non représenté),
- un registre de transfert 9, par exemple du type à décalage, apte à chaque séquence du photodétecteur 3 à transférer le contenu des premiers moyens de stockage 7 dans lesdits moyens de stockage 8, de sorte que, à un instant donné, chacun desdits premiers moyens de stockage 7 contient une partie de l'image courante du paysage observé par l'objectif 1, alors que chacun desdits seconds moyens de stockage 8 contient une partie de l'image précédente dudit paysage,
- un soustracteur 10, apte à effectuer la différence entre les contenus desdits premiers et seconds moyens de stockage 7 et 8,
- des troisièmes moyens de stockage 11, comprenant au moins un condensateur apte à emmagasiner le signal de différence apparaissant à la sortie du soustracteur 10, et
- des moyens de seuillage 12, aptes à ne laisser passer que les signaux de différence, emmagasinés dans les troisièmes moyens de stockage 11, qui sont supérieurs à un seuil S réglable, au moins approximativement représentatif du bruit du paysage en cours d'observation par l'objectif 1.

Ainsi, comme l'illustre schématiquement la figure 2, l'ensemble 100 des soustracteurs 10 effectue successivement la différence entre les images I(t-1) et I(t-2), puis la différence entre les images I(t) et I(t-1), puis la différence entre les images I(t + 1) et I(t), etc.

L'ensemble 100 des soustracteurs 10 crée donc des images de différence D(t-1), D(t), D(t + 1)... qui sont vides si les images successives I(t-2),
I(t-1), I(t),... sont identiques. En revanche, si une lueur de bouche d'arme légère se produit pendant les images I(t) et I(t + 1), il apparaît des taches lumineuses 14 sur celles-ci. Par l'action des soustracteurs 10, ces taches lumineuses 14 sont mises en évidence sous la forme de taches 15, sur les images de différence D(t) et D(t + 2) concernées, puisqu'elles sont seules à apparaître, à cause des différences d'images effectuées.

Ces taches 15, ainsi extraites, sont localisables par leurs coordonnées X et Y sur le photodétecteur 2 et leur intensité est seuillable par l'ensemble 120 des moyens de seuillage 12.

Ainsi, ne sont extraits à l'ensemble 160 des sorties 16 des moyens de seuillage 12 que les signaux électriques correspondant à des taches 15 dont l'intensité est supérieure au seuil S.

Ces signaux électriques seuillés peuvent être déchargés par un dispositif de déchargement 17, immédiatement après seuillage, par exemple à une fréquence de 1000 Hz.

Toutefois, comme illustré par la figure 1, lesdits signaux électriques seuillés, ainsi extraits, peuvent être stockés et accumulés dans une zone tampon 18, de laquelle ils peuvent être déchargés à une fréquence inférieure à 1000 Hz.

Quel que soit le mode de déchargement, les parties de différences d'images ayant dépassé le seuil et caractérisées par leur coordonnées X et Y sur le photodétecteur et leur intensité sont transférées à l'utilisateur.

Par ailleurs, comme on peut le voir sur la figure 1, à chaque photosite 3 du photodétecteur 2, est associée une prise de signal 19 reliée à la sortie 4 dudit photosite et disposée en parallèle sur le circuit de mesure 5 correspondant.

Ainsi, le dispositif de détection selon l'invention peut aisément être couplé ou intégré à un autre détecteur.

## Revendications

1. Procédé pour la détection de lueurs de bouche d'armes légères au moyen d'un photodétecteur matriciel infrarouge dans lequel,
- on met en oeuvre un photodétecteur matriciel infrarouge (2) sensible dans la bande MWIR réagissant aux rayonnements infrarouge dont les longueurs d'onde sont comprises entre 3 et 5 µm et comportant une pluralité de photosites dont chacun forme une partie d'une image d'un paysage observé par le photodétecteur, chaque photosite étant associé à un circuit de mesure, et
- on effectue la suite d'opérations suivantes dans le photodétecteur infrarouge :
• acquisition, à une fréquence de l'ordre de 1000 Hz, d'images successives du paysage dans lequel peuvent se trouver lesdites armes légères, chaque partie d'une image courante étant acquise dans des premiers moyens (7) de stockage d'un photosite du circuit de mesure, une partie d'une image précédente étant acquise dans des seconds moyens (8) de stockage du photosite du circuit, ledit photosite formant la partie correspondante de l'image courante et de l'image précédente,
• calcul des différences entre chacune desdites images et celle qui la précède par des moyens (10) aptes à effectuer la différence entre chaque partie de l'image courante et chaque partie de l'image précédente,
• stockage desdites différences dans des troisièmes moyens (11) de stockage,
• seuillage desdites différences d'images au moyen d'un seuil au moins approximativement représentatif du bruit dudit paysage par des moyens (12) de seuillage pour ne laisser passer que les signaux de différence supérieurs au seuil (S),
• extraction uniquement desdites différences des parties d'images supérieures audit seuil (S) par des moyens (17) pour décharger uniquement les différences des parties d'images supérieures audit seuil,
• déchargement, par un dispositif de déchargement (17), uniquement des différences des parties d'images supérieures audit seuil, et
• transmission à un utilisateur des parties de différences d'images ayant dépassées le seuil et **caractérisées par** leur coordonnées (X et Y) sur le photodétecteur et leur intensité.

2. Procédé selon la revendication 1,
**caractérisé en ce que** les différences des parties d'images supérieures audit seuil sont déchargées immédiatement après seuillage.

3. Procédé selon la revendication 2,
**caractérisé en ce que** la fréquence de déchargement immédiate desdites différences d'images est de l'ordre de 1000 Hz.

4. Procédé selon la revendication 1,
**caractérisé en ce que**, après seuillage, les différences des parties d'images supérieures audit seuil sont stockées et accumulées dans une zone tampon (18).

5. Procédé selon la revendication 4,
**caractérisé en ce que** la fréquence de déchargement desdites différences d'images hors de la zone tampon est inférieure à 1000 Hz.

6. Dispositif pour la détection de lueurs de bouche d'armes légères au moyen d'un photodétecteur infrarouge matriciel séquentiel comportant une pluralité de photosites dont chacun d'eux forme une partie de l'image du paysage observé par ledit photodétecteur,
**caractérisé** :
- **en ce que** ledit photodétecteur (2) est sensible dans la bande MWIR réagissant aux rayonnements infrarouge dont la longueur d'onde est comprise entre 3 et 5 µ m et est apte à acquérir des images successives à une fréquence de l'ordre de 1000 Hz ;
- **en ce que**, à chacun des photosites (3) dudit photodétecteur (2), est associé un circuit de mesure (5) comprenant :
• des premiers moyens (7) de stockage de la partie correspondante de l'image courante,
• des deuxièmes moyens (8) de stockage de la partie correspondante de l'image précédente,
• des moyens (10) aptes à effectuer la différence entre ladite partie de l'image courante et ladite partie de l'image précédente,
• des troisièmes moyens (11) de stockage de ladite différence d'images, et
• des moyens (12) de seuillage de ladite différence d'images au moyen d'un seuil au moins approximativement représentatif du bruit dudit paysage pour ne laisser passer que les signaux de différence supérieurs au seuil (S), et
- **en ce que** sont prévus des moyens (17) pour décharger uniquement les différences des parties d'images supérieures audit seuil et **caractérisées par** leur coordonnées (X et Y) sur la photodétecteur et leur intensité.

7. Dispositif selon la revendication 6,
**caractérisé en ce que** lesdits premiers, deuxièmes et troisièmes moyens de stockage (7, 8, 11) comportent des condensateurs.

8. Dispositif selon l'une des revendications 6 ou 7,
**caractérisé en ce que** lesdits premiers et deuxièmes moyens de stockage (7, 8) sont commandés par un registre de transfert (9) permettant, à chaque séquence du fonctionnement dudit photodétecteur, de faire passer ladite partie de l'image courante de la séquence précédente depuis lesdits premiers moyens de stockage jusqu'auxdits deuxièmes moyens de stockage.

9. Dispositif selon l'une des revendications 6 à 8,
**caractérisé en ce que** ledit seuil (S) est réglable pour pouvoir être adapté à différents paysages.

10. Dispositif selon l'une des revendications 6 à 9,
**caractérisé en ce que**, à chaque photosite (3), est associée une prise de signal (19) disposée en parallèle sur ledit circuit de mesure (5).

## Patentansprüche

1. Verfahren zur Detektion von Mündungsfeuern von Leichtwaffen, mittels eines Infrarot-Matrix-Photodetektors, wobei
- ein Infrarot-Matrix-Photodetektor (2) eingesetzt wird, der im MWIR-Band empfindlich ist und auf Infrarotstrahlung reagiert, deren Wellenlängen zwischen 3 und 5 µm enthalten sind, und eine Vielzahl von Photositen beinhaltet, von denen jeder einen Teil eines Bildes einer vom Photodetektor beobachteten Landschaft bildet, wobei jede Photosite einer Messschaltung zugeordnet ist, und
- die Folge der folgenden Vorgänge im Infrarot-Photodetektor durchgeführt wird:
• Erfassen, mit einer Frequenz von etwa 1000 Hz, von aufeinanderfolgenden Bildern der Landschaft, in der sich die Leichtwaffen befinden können, wobei jeder Teil eines aktuellen Bildes in ersten Mitteln (7) zum Speichern einer Photosite der Messschaltung erfasst wird, wobei ein Teil eines vorherigen Bildes in zweiten Mitteln (8) zum Speichern der Photosite der Schaltung erfasst wird, wobei die Photosite den entsprechenden Teil des aktuellen Bildes und des vorherigen Bildes bildet,
• Berechnen der Unterschiede zwischen jedem der Bilder und jenem, das diesem vorangeht mit Mitteln (10), die in der Lage sind, den Unterschied zwischen jedem Teil des aktuellen Bildes und jedem Teil des vorherigen Bildes durchzuführen,
• Speichern der Unterschiede in dritten Speichermitteln (11),
• Schwellenwertbildung der Bildunterschiede mittels eines Schwellenwerts, der zumindest annähernd repräsentativ für das Rauschen der Landschaft ist, durch Schwellenwertbildungsmittel (12), um nur Unterschiedssignale oberhalb des Schwellenwerts (S) passieren zu lassen,
• Extrahieren nur der Unterschiede der Bildteile oberhalb des Schwellenwerts (S) durch Mittel (17) zum Ausgeben nur der Unterschiede der Bildteile oberhalb des Schwellenwerts,
• Ausgeben durch eine Ausgabevorrichtung (17) nur der Unterschiede der Bildteile oberhalb des Schwellenwerts, und
• Übertragen der Bildunterschiedteile, die den Schwellenwert überschritten haben, und durch ihre Koordinaten (X und Y) auf dem Photodetektor und ihre Intensität gekennzeichnet sind, an einen Benutzer.

2. Verfahren nach Anspruch 1,
**dadurch gekennzeichnet, dass** die Unterschiede der Bildteile oberhalb des Schwellenwerts unmittelbar nach der Schwellenwertbildung ausgegeben werden.

3. Verfahren nach Anspruch 2,
**dadurch gekennzeichnet, dass** die unmittelbare Ausgabefrequenz der Bildunterschiede etwa 1000 Hz ist.

4. Verfahren nach Anspruch 1,
**dadurch gekennzeichnet, dass** nach der Schwellenwertbildung die Unterschiede der Bildteile oberhalb des Schwellenwerts gespeichert und in einer Pufferzone (18) akkumuliert werden.

5. Verfahren nach Anspruch 4,
**dadurch gekennzeichnet, dass** die Ausgabefrequenz der Bildunterschiede außerhalb der Pufferzone kleiner als 1000 Hz ist.

6. Vorrichtung zur Detektion von Mündungsfeuern von Leichtwaffen mittels eines sequentiellen Matrix-Infrarot-Photodetektors, eine Vielzahl von Photositen beinhaltend, von denen jede einen Teil des durch den Photodetektor beobachteten Bildes der Landschaft bildet,
**dadurch gekennzeichnet, dass**:
- der Photodetektor (2) im MWIR-Band empfindlich ist, das auf Infrarotstrahlung reagiert, deren Wellenlänge zwischen 3 und 5 µm enthalten ist, und in der Lage ist, aufeinanderfolgende Bilder mit einer Frequenz von etwa 1000 Hz zu erfassen;
- jeder der Photositen (3) des Photodetektors (2) eine Messschaltung (5) zugeordnet ist, die Folgendes umfasst:
• erste Mittel (7) zum Speichern des entsprechenden Teils des aktuellen Bildes,
• zweite Mittel (8) zum Speichern des entsprechenden Teils des vorherigen Bildes,
• Mittel (10), die in der Lage sind, den Unterschied zwischen dem Teil des aktuellen Bildes und dem Teil des vorherigen Bildes durchzuführen,
• dritte Mittel (11) zum Speichern des Bildunterschieds, und
• Mittel (12) zur Schwellenwertbildung des Bildunterschiedes mittels eines Schwellenwerts, der zumindest annähernd repräsentativ für das Rauschen der Landschaft ist, um nur Unterschiedssignale oberhalb des Schwellenwerts (S) passieren zu lassen, und
- Mittel (17) vorgesehen sind, um nur die Unterschiede der Bildteile oberhalb des Schwellenwerts auszugeben und durch ihre Koordinaten (X und Y) auf dem Photodetektor und ihre Intensität gekennzeichnet sind.

7. Vorrichtung nach Anspruch 6,
**dadurch gekennzeichnet, dass** die ersten, zweiten und dritten Speichermittel (7, 8, 11) Kondensatoren beinhalten.

8. Vorrichtung nach einem der Ansprüche 6 oder 7,
**dadurch gekennzeichnet, dass** die ersten und zweiten Speichermittel (7, 8) durch ein Übertragungsregister (9) gesteuert werden, das es ermöglicht, bei jeder Betriebssequenz des Photodetektors den Teil des aktuellen Bildes der vorherigen Sequenz von den ersten Speichermitteln zu den zweiten Speichermitteln zu übertragen.

9. Vorrichtung nach einem der Ansprüche 6 bis 8,
**dadurch gekennzeichnet, dass** der Schwellenwert (S) einstellbar ist, um an verschiedene Landschaften angepasst zu werden.

10. Vorrichtung nach einem der Ansprüche 6 bis 9,
**dadurch gekennzeichnet, dass** jeder Photosite (3) ein Signalabgriff (19) zugeordnet ist, der parallel auf der Messschaltung (5) angeordnet ist.

## Claims

1. Method for detecting muzzle flashes from light weapons by means of an infrared matrix photodetector, wherein
- an infrared matrix photodetector (2) is implemented that is sensitive in the MWIR band reacting to infrared radiation of which the wavelengths are between 3 and 5 µm and comprising a plurality of photosites, each of which forms a portion of the image of the landscape observed by the photodetector, each photosite being associated with a measuring circuit, and
- the sequence of the following operations is carried out in the infrared photodetector:
• acquiring, at a frequency of approximately 1000 Hz, successive images of the landscape in which said light weapons may be located, a portion of the current image being acquired in first storage means (7) of a photosite of a measuring circuit, a portion of a preceding image being acquired in second storage means (8) of a photosite of a measuring circuit, said photosite forming the corresponding portion of the current image and of the preceding image,
• calculating the differences between each of said images and the preceding image, by means (10) which are capable of discerning the difference between each portion of the current image and each portion of the preceding image,
• storing said differences in third storage means (11),
• thresholding said image differences by means of a threshold that is at least approximately representative of the noise of said landscape, by thresholding means (12) in order to let past only the difference signals which are above the threshold (S), extracting only said differences in the image portions that are above said threshold (S), for unloading only the differences in the image portions that are above said threshold,
• unloading, by an unloading device (17), only the differences in the image portions that are above said threshold, and
• transferring to a user of the image-difference portions that have exceeded the threshold and are **characterised by** their coordinates (X and Y) on the photodetector and their intensity.

2. Method according to claim 1,
**characterised in that** the differences in the image portions that are above said threshold are unloaded immediately after thresholding.

3. Method according to claim 2,
**characterised in that** the immediate-unloading frequency of said image differences is approximately 1000 Hz.

4. Method according to claim 1,
**characterised in that**, after thresholding, the differences in the image portions that are above said threshold are stored and collected in a buffer zone (18).

5. Method according to claim 4,
**characterised in that** the unloading frequency of said image differences outside the buffer zone is less than 1000 Hz.

6. Device for detecting muzzle flashes from light weapons by means of a sequential infrared matrix photodetector, comprising a plurality of photosites, each of which forms a portion of the image of the landscape observed by said photodetector,
**characterised in that**:
- said photodetector (2) is sensitive in the MWIR band reacting to infrared radiation of which the wavelength is between 3 and 5 µm, and is capable of acquiring successive images at a frequency of approximately 1000 Hz;
- a measuring circuit (5) is associated with each of the photosites (3) of said photodetector (2), comprising:
• first means (7) for storing the corresponding portion of the current image,
• second means (8) for storing the corresponding portion of the preceding image,
• means (10) which are capable of discerning the difference between said portion of the current image and said portion of the preceding image,
• third means (11) for storing said image difference, and
• means (12) for thresholding said image difference by means of a threshold that is at least approximately representative of the noise of said landscape, in order to let past only the difference signals which are above the threshold (S), and
- means (17) are provided for unloading only the differences in the image portions that are above said threshold and are **characterised by** their coordinates (X and Y) on the photodetector and their intensity.

7. Device according to claim 6,
**characterised in that** said first, second and third storage means (7, 8, 11) comprise capacitors.

8. Device according to either claim 6 or claim 7,
**characterised in that** said first and second storage means (7, 8) are controlled by a transfer register (9) that allows, for each operating sequence of said photodetector, said portion of the current image of the preceding sequence to pass from said first storage means to said second storage means.

9. Device according to any of claims 6 to 8,
**characterised in that** said threshold (S) is adjustable in order to be able to be adapted to different landscapes.

10. Device according to any of claims 6 to 9,
**characterised in that** a signal receiver (19) that is arranged in parallel in said measuring circuit (5) is associated with each photosite (3).
